# EUROPEAN PATENT APPLICATION

(11) **EP 1 582 256 A1**
(43) Date of publication of application: **05.10.2005**
(21) Application number: 05251931.1
(22) Date of filing: 29.03.2005
(51) Int. Cl.: B01J 19/00

(54) **Probe array**

(30) Priority: 29.03.2004 JP 2004097228
(71) Applicant: Lintec Corporation, Tokyo 173-0001 (JP)
(72) Inventor: Yamamoto, Yuko, Itabashi-ku, Tokyo 173-0016 (JP); Saito, Rui, Kitamoto-shi, Saitama 364-0027 (JP); Okabe, Hideaki, Chigasaki-shi, Kanagawa 253-0011 (JP)
(74) Representative: Nicholls, Michael John

(57) **Abstract**

In order to provide a probe array capable of detecting target substances with simple operation and a good reproducibility, the present invention provides a probe array 1 comprising a cylindrical first member 11, a columned second member 12 housed in the hollow portion of the first member 11 and probe groups P immobilized onto the outer face of the second member 12, wherein spacers 13a are provided on the outer face of the second member 12 for preventing contact between the inner face of the first member 11 and the outer face of the second member 12.

## Description

### BACKGROUND OF THE INVENTION

### Field of the invention

The present invention relates to a probe array.

### Description of the related art

In recent years probe arrays such as DNA chips, protein chips, etc., have been developed wherein probes (for instance, a biological substance such as DNA, proteins, etc.) that can react with a target substance are immobilized onto a plate-like substrate of glass, silicon, etc., in order to detect a target substance, as disclosed for instance in Japanese Unexamined Patent Application Publication No. H11-108928. In probe array detection, a liquid sample containing a target substance is added onto a plate-like substrate and is then covered by a cover-glass, etc., to avoid drying; after reaction of the probe with the target substance, the probe array is washed and substances other than the target substance are removed, after which is carried out the detection of a labeling substance (such as a fluorochrome, an enzyme, etc.), bonded beforehand to the target substance.

### SUMMARY OF THE INVENTION

However, conventional probe arrays require performing a number of manual operations, such as taking up a minute liquid sample with a micropipette and adding the sample uniformly onto a plate-like substrate, covering the sample with a cover glass, removing the cover glass after reaction, and washing uniformly the plate-like substrate, etc. These are all extremely delicate operations in which the manipulation of the operator can result in greatly diverging results. Thus, result reproducibility becomes difficult to achieve. Devices have also been developed for automating detection, but these are not easily available owing to their substantial expense.

Thus, an object of the present invention is to provide an easy-to-use probe array capable of detecting a target substance with a good reproducibility.

In order to solve the above problems, the present invention provides a probe array comprising a tubular first member, a second member housed in the hollow portion of the first member, and probes immobilized on the outer face of the second member, wherein a spacer for preventing contact between the inner face of the first member and the outer face of the second member is provided on the inner face of the first member or on the outer face of the second member.

In the probe array according to the present invention, liquids such as liquid samples, wash solutions, etc. can flow into and out of the hollow portion of the first member through openings in the first member. Also, in the probe array according to the present invention, the probes immobilized on the outer face of the second member protrude into the hollow portion of the first member in such a way so as to be able to come into contact with a liquid flowed into the hollow portion of the first member. In particular, the probe array according to the present invention comprises a spacer that prevent contact between the inner face of the first member and the outer face of the second member, thereby affording a reliable contact between the probes and the liquid flowed into the hollow portion of the first member.

Thus, in the probe array according to the present invention, the easy operation of flowing a liquid sample, a wash solution, etc., in and out of the hollow portion of the first member allows detecting a target substance with a good reproducibility.

### BRIEF DESCRIPTION OF THE DRAWINGS

FIG. 1(a) is a perspective view of a probe array according to an embodiment of the present invention;
FIG. 1(b) is a cross-sectional view of the same probe array;
FIG. 2(a) is a perspective view of a probe array according to another embodiment of the present invention;
FIG. 2(b) is a cross-sectional view of the same probe array; and
FIG. 3 is a plan view of a plastic film used when protrusions (spacers) are provided on the outer face of a glass rod in the examples.

### DESCRIPTION OF THE PREFERRED EMBODIMENTS

The present invention is described in detail below, with reference to the drawings.

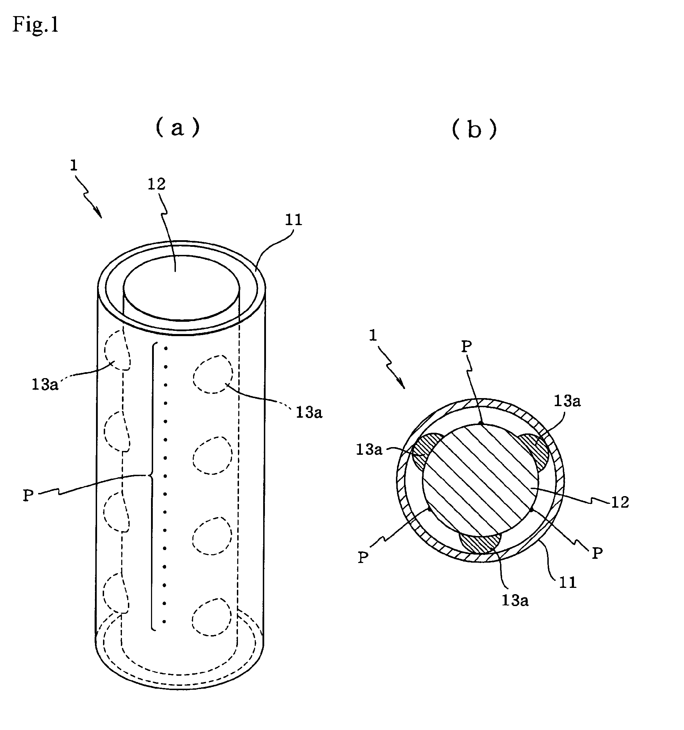

FIG. 1(a) is a perspective view of a probe array according to a embodiment, and FIG. 1(b) is a cross-sectional view of the same probe array.

As shown in FIG. 1, the probe array 1 according to the present embodiment comprises a cylindrical first member 11, a columned second member 12 housed in the hollow portion of the first member 11, probe groups P immobilized onto the outer face of the second member 12, and spacers 13a provided on the outer face of the second member 12.

As shown in FIG. 1, the first member 11 has a hollow portion and two openings passing through the hollow portion, so that a liquid may pass through the openings and flow into and out of the hollow portion of the first member 11.

Although the first member 11 shown in FIG. 1 has a cylindrical shape, the shape of the first member 11 may admit modifications into other tubular shape (e.g. a hollow prism, etc.). The length of the first member 11 may be for instance 1 to 30 cm, and its inner diameter for instance 1 mm to 1 cm, with arbitrary modifications allowed.

The material of the first member 11 is not particularly restricted provided it is insoluble in a liquid sample, a washing liquid, etc., and may be for instance plastics including thermoplastic resins such as polyethylene resins, e.g. polyethylene, polyethylene copolymer (for instance, ethylene-ethyl acrylate copolymer, ethylene-vinyl acetate copolymer), etc.; polypropylene; polystyrene resins, e.g. polystyrene, polystyrene copolymer (for instance, acrylonitrile-styrene copolymer, acrylonitrile-styrene-butadiene copolymer), etc.; vinyl chloride resins; vinylidene chloride resins; fluoroplastics, e.g. polytetrafluoroethylene, etc.; acrylic resins, e.g. polymethyl methacrylate, polyacrylonitrile, etc.; polyesters, e.g. polyethylene terephthalate, polyethylene naphthalate, polybutylene terephthalate; polycarbonate, etc.; metals such as iron, copper, aluminum, etc.; glass; ceramics, etc., as well as composites of the above.

The material of the first member 11 is preferably transparent or translucent (i.e. has optical transparency). Thus, a labeling substance (e.g. fluorescent substance, etc.) bonded to a target substance can be detected at the outer side of the probe array 1 without removing the second member 12 from the hollow portion of the first member 11.

Although the second member 12 shown in FIG. 1 has a columned shape, to the extent that it can be housed in the hollow portion of the first member 11 and a liquid can be flowed into the hollow portion of the first member 11 in which the second member 12 is housed, the shape of the second member 12 may admit modifications into, for instance, a sheet-like member, a flat plate member, a hollow cylindrical member, a conical member, a prismatic member, a pyramidal member, a member of curved or bent flexible sheets, etc.

The material of the second member 12 is not particularly restricted provided it is insoluble in a liquid sample, a wash solution, etc., and may be for instance plastics such as the aforementioned thermoplastic resins; metals such as iron, copper, aluminum, etc.; glass; ceramics, etc., as well as composites of the above.

The second member 12 may be porous or non-porous. In case that the second member 12 is porous, the second member 12 has a greater surface area, which allows immobilizing more probes on the surface thereof.

As shown in FIG. 1, a plurality of spot-like probe groups P are immobilized on the outer face of the second member 12, in such a way that the kind of probe contained in each probe group may be identified based on the position in which each probe group is immobilized. The probe groups may be immobilized in an arbitrary arrangement provided there is a correspondence between probe kind and probe position; for instance, the probe groups may be immobilized as longitudinal stripes. The number of probe groups P immobilized on the outer face of the second member 12 is not particularly restricted and may vary as needed. The arrangement, spot size, etc. of the probe groups may also vary arbitrarily.

One probe group contains a plurality of probes of the same kind. The probes contained in each probe group are biological substances such as nucleic acids, proteins, antigens, antibodies, enzymes, sugar chains, etc. The kinds of probes contained in different probe groups may be identical or different; herein the entire set of probe groups contains preferably a plurality of probe types. The plurality of probe types immobilized on the second member 12 allows detecting simultaneously and in parallel a plurality of target substance types.

Each probe group can attach to the surface of the second member 12 by electrostatic binding or covalent binding, protein-protein interactions, protein-low molecular compound interactions, etc. In order to promote such immobilizing effect, the surface of the second member 12 or the probes may be subjected to appropriate chemical modifications using conventional techniques.

In electrostatic binding, the surface of the second member 12 is coated for instance with a polycationic substance. A "cationic substance" refers herein to a substance having cationic groups in its molecule. The cationic substance can form a conjugate with nucleic acid through electrostatic interaction. Cationic groups include for instance amino group; monoalkylamino groups such as methylamino group, ethylamino group, etc.; dialkylamino groups such as dimethylamino group, diethylamino group, etc.; imino group; guanidino group, etc. Cationic substances include for instance macromolecules having cationic groups; homopolymers or copolymers of basic amino acids such as polylysine, polyarginine, copolymers of lysine and arginine, etc., and derivatives thereof; polycationic polymers such as polyethyleneimine, etc.

In covalent binding, covalent bonds are formed using the functional groups present in the surface of the second member 12 and in the probes. Concrete examples of functional groups capable of forming covalent bonds include for instance carboxyl group, amino group, hydroxyl group, etc. If there are carboxyl groups present in the surface of the second member 12, these carboxyl groups may be activated with a carbodiimide such as 1-ethyl-3-(3-dimethylaminopropyl)-3-ethylcarbodiimide hydrochloride (EDC), etc., in order to react subsequently with the amino groups of the probes, thus forming amide bonds between the second member 12 and the probes. If there are amino groups present in the surface of the second member 12, these amino groups are transformed into carboxyl groups using a cyclic acid anhydride such as succinic acid anhydride, etc., in order to react subsequently with the amino groups of the probes, thus forming amide bonds between the second member 12 and the probes.

Alternatively, the probes may be immobilized onto the second member 12 by way of specific interactions such as streptavidin or avidin/biotin, maltose-binding protein/maltose, polyhistidine peptides/metallic ions such as nickel, cobalt, etc., glutathione-S-trasferase/glutathione, calmodulin/calmodulin-binding peptide, ATP binding proteins/ATP, nucleic acid/complementary nucleic acid, receptor protein/ligand, enzyme/substrate, antibody/antigen, IgG/protein A, etc.

As shown in FIG. 1, spacers 13a are provided on the outer face of the second member 12 for preventing contact between the inner face of the first member 11 and the outer face of the second member 12. The spacers 13a need merely prevent contact between the inner face of the first member 11 and at least the areas of the outer face of the second member 12 where the probe groups P are immobilized, and need not prevent contact between the inner face of the first member 11 and the areas of the outer face of the second member 12 where no probe groups P are immobilized.

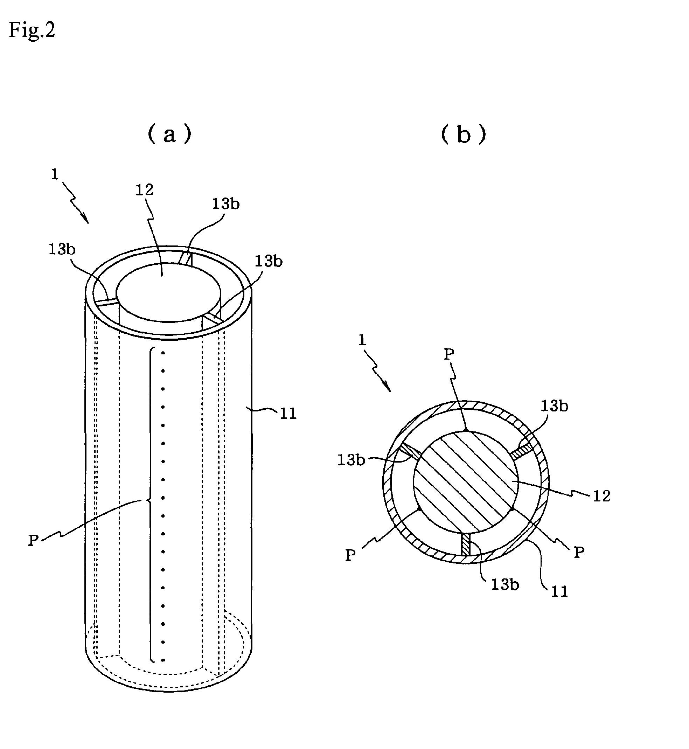

As shown in FIG. 1, the spacers 13a have a protrusion-like shape; this shape, however, may admit variations provided it prevents contact between the inner face of the first member 11 and the outer face of the second member 12. Other protrusion-like shapes for the spacers 13a include for instance shapes substantially conical, pyramidal, cylindrical, prismatic, etc. The spacers 13a may also have a plate-like shape (thin plate), as in the spacers 13b shown in FIG. 2.

The size of the spacers 13a shown in FIG. 1 is adjusted so that when the second member 12 is housed in the hollow portion of the first member 11, the tips of all the spacers 13a touch against the inner face of the first member 11; however, the size of the spacers 13a may be arbitrarily modified provided the contact between the inner face of the first member 11 and the outer face of the second member 12 is prevented.

As shown in FIG. 1, the spacers 13a are provided on the outer face of the second member 12, however they may be provided on the inner face of the first member 11.

The number, arrangement, etc. of the spacers 13a may also admit variations on condition that the contact between the inner face of the first member 11 and the outer face of the second member 12 is prevented.

The material of the spacer 13a is not particularly restricted provided it is insoluble in a liquid sample, a wash solution, etc., and may be for instance plastics such as the aforementioned thermoplastic resins; metals such as iron, copper, aluminum, etc.; glass; ceramics, etc., as well as composites of the above.

When the spacers 13a are provided on the outer face of the second member 12, the spacers 13a and the second member 12 may be formed together or separately. When the spacers 13a are provided on the inner face of the first member 11, the spacers 13a and the first member 11 may be formed together or separately. If formed as separate members, different members may be joined using for instance adhesives, etc.

When the spacers 13a are provided on the outer face of the second member 12, they may be provided directly or indirectly by way of other intervening members. Similarly, when the spacers 13a are provided on the inner face of the first member 11, they may be provided directly or indirectly by way of other intervening members. Spacers 13a provided indirectly by way of other intervening members include for instance flexible sheet members (e.g. sheet members made of plastic such as the above-listed thermoplastic resins, etc.) having spacers 13a wound around the second member 12, etc.

When the spacers 13a provided on the outer face of the second member 12 have ends that touch against the inner face of the first member 11, the ends of the spacers 13a and the inner face of the first member 11 may be bonded together using an adhesive. Similarly, when the spacers 13a provided on the inner face of the first member 11 have ends that touch against the outer face of the second member 12, the ends of the spacers 13 and the outer face of the second member 12 may be bonded together using an adhesive.

Detection of target substances using the probe array 1 may be carried out as follows.

Step 1: A liquid sample containing the target substance bonded to a labeling substance is flowed into the hollow portion of the first member 11 so as to bring into contact the target substance with the probe groups P.

The type of target substance is not particularly restricted and may include for instance biological substances such as nucleic acids, proteins, antigens, antibodies, enzymes, sugar chains, etc. Combinations of probe and target substance include for instance nucleic acids/complementary nucleic acids, receptor proteins/ligands, enzymes/substrates, antibodies/antigens, etc. Nucleic acids herein include DNA, RNA, as well as analogues and derivatives thereof (for instance peptide nucleic acids (PNA), phosphorothioate DNA, etc.)

Labeling substance include for instance fluorescent substances such as fluorescein, rhodamine, phycoerythrin, etc.; enzymes such as alkaline phosphatase, horseradish peroxidase, etc.; chemoluminiscent substances such as luminol, lucigenin, acridinium esters, etc.; bioluminescent substances such as luciferase, luciferin, etc. The solvent for the liquid sample can be selected in accordance with the kind of target substance, and may be for instance water, a buffer solution, or an organic solvent. The liquid samples can be flowed into the hollow portion of the first member 11 by capillarity, using a syringe, etc.

Step 2: After the liquid sample is flowed out of the hollow portion of the first member 11, a wash solution is flowed into and out of the hollow portion of the first member 11 to wash the probe groups P. This allows removing the substances other than the target substances that have reacted with the probe groups P.

Step 3: Detection of the labeling substance bonded to the target substance is performed.

In case that the labeling substance is a fluorescent labeling substance, the outer face of the second member 12 is exposed to an excitation light, and the fluorescence emitted from the outer face of the second member 12 is detected using a fluorescence detector. In case that the labeling substance is an enzyme, the target substance can be detected by an enzymatic color reaction.

Detection of the labeling substance may be carried out after removing the second member 12 from the hollow portion of the first member 11, or without doing so, if the first member 11 has optical transparency.

The provision of spacers 13a that prevent contact between the inner face of the first member 11 and the outer face of the second member 12 affords a reliable contact between the probe groups immobilized onto the outer face of the second member 12 and a liquid sample, a wash solution, etc., flowed into the hollow portion of the first member 11. This increases reaction efficiency and washing efficiency, and results in a better accuracy in the detection of the target substance.

The present invention is explained in detail below by way of examples.

### (1) Preparation of a plastic film with protuberances.

A screen plate was manufactured by forming a pattern of 1 mm diameter circles in a polyester screen (80 mesh). The distance between the centers of the circles in the pattern was set to 4 mm. Using the above screen plate and an UV-curable screen-printing ink (silk-screen ink for braille points by Toyo Ink Mfg. Co. Ltd.), a plurality of protuberances was screen-printed onto a 19 mm x 12 mm polyester film (Lumirror, by Toray Industries Inc., thickness 50 µm). Curing was performed under a metal halide lamp at 120 W/cm and 10 m/min.

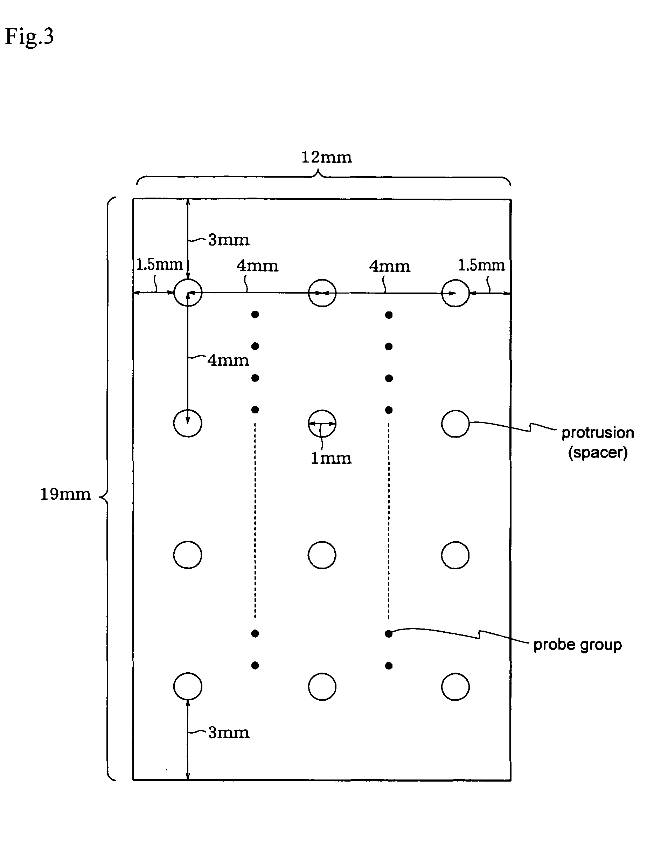

A plastic film having a plurality of protuberances (height: 500 µm), as shown in FIG. 3, was obtained.

### (2) Immobilizing the probe DNA onto the plastic film

The plastic film with protrusions obtained above (1) was dipped in a poly-L-lysine solution (concentration: 0.01%, solvent: 0.1 x PBS), and was shaken for 1 hour. Next, the plastic film was thoroughly washed 4 times with ultrapure water to wash off the excess poly-L-lysine. The poly-L-lysine was then adhered to the plastic film by drying for 4 hours at 60°C in a vacuum oven.

10 µL each of probe DNA for positive control and probe DNA for negative control (concentration: 100 pmol/µL, solvent: ultrapure water) were spotted onto the plastic film coated with poly-L-lysine. As shown in FIG. 3, the spots were distributed in 2 rows along the protuberance-free areas in the face where protuberances were formed, and with a separation of 1 cm between spots. As probe DNA for positive control was used a 200 to 500mer poly (dA), and as probe DNA for negative control was used a 200 to 500mer poly (dT). Next, the spotting solution was dried and was exposed to 600 mJ ultraviolet radiation in a UV crosslinker. For blocking then the surface of the plastic film, the latter was immersed in a blocking solution (95.7 mL of 1-methyl-2-pyrrolidone, 1.6 g of succinic acid anhydride, and 4.3 mL of 1M aqueous sodium borate (pH 8.0)), in which it was shaken for 20 minutes; the plastic film was then rinsed with ultrapure water at 95°C, was immersed and shaken in 95% ethanol for 1 to 2 minutes, and was dried.

### (3) Preparation of a capillary probe array

The plastic film with immobilized probe DNA obtained above (2) was wrapped around a glass rod (2.8 mm (diameter) x 3 cm (length)) with the side where the probe DNA was immobilized facing outwards; the whole was then inserted into a transparent plastic tube (4 mm (inside diameter) x 3 cm (length) x 100 µm (thickness)) made of polyethylene terephthalate. The protrusions formed on the plastic film acted as spacers preventing the contact between the face with the immobilized probe DNA and the inner face of the plastic tube.

### (4) Hybridization

In the hollow portion of the capillary probe array obtained above (3) were soaked up 100 µL of hybridization solution containing target oligonucleotide (target oligonucleotide concentration: 1 pmol/ µL, yeast tRNA concentration: 1 µg/µL, solvent: 3 x SSC containing 0.2% SDS), the ends of the capillary probe array were sealed with paraffin film (Parafilm, by Pechiney Plastic Packaging Inc.) and the array was warmed overnight at 40°C in a thermostatic bath. As the target oligonucleotide was used a 22mer poly (dT) bonded to biotin at the 5' end.

### (5) Post-hybridization washing

The capillary probe array was removed from the thermostatic bath and, after discarding the hybridization solution, the hollow portion of the capillary probe array was filled with wash buffer 1 (2 x SSC, 0.1% SDS) for 10 seconds in order to wash off the nonspecifically adsorbed target oligonucleotide. After discarding the wash buffer 1, the hollow portion of the capillary probe array was filled with wash buffer 2 (1 x SSC), which was discarded after 10 seconds. This procedure was repeated 3 times. An operation identical to that of the wash buffer 2 was carried out next with wash buffer 3 (0.2 x SSC).

### (6) Blocking and detection of the target oligonucleotides

The hollow portion of the capillary probe array was filled with blocking solution (1% casein, 3 x SSC), then blocking proceeded for 30 minutes at room temperature. After discarding the blocking solution, the capillary probe array was filled with streptavidin/alkaline phosphatase conjugate solution (stock solution diluted 2000-fold in a 0.2M NaCl, 0.1M Tris-HCl (pH 7.4), 0.05% Triton X, 1% casein solution), and the reaction was left to proceed at room temperature for 30 minutes. After discarding the streptavidin/alkaline phosphatase conjugate solution, the capillary probe array was filled with buffer solution A (0.2M NaCl, 0.1M Tris-HCl (pH7.4), 0.05% Triton-X) for 5 minutes, after which it was discarded. This procedure was repeated twice in order to remove the streptavidin/alkaline phosphatase conjugate not attached to the biotin bonded with the target oligonucleotide. Next, the capillary probe array was filled with buffer solution B (0.2M NaCl, 0.1M Tris-HCl (pH7.4) for 10 seconds, after which it was discarded. Finally, the capillary probe array was filled with substrate solution (10 mL of buffer solution B, 9 µL of BCIP (5-bromo-4-chloro-3-indolyl phosphate) and 18 µL of NBT (nitroblue tetrazolium)), then the coloring reaction was left to proceed for 3 hours at room temperature.

As a result, clear signals appeared in the regions where the probe DNA for positive control (complementary with the target oligonucleotide) was immobilized, whereas no signals appeared at all in the regions where the probe DNA for negative control (not complementary with the target oligonucleotide) was immobilized.

## Claims

1. A probe array comprising a tubular first member, a second member housed in the hollow portion of the first member, and probes immobilized on the outer face of the second member,
wherein a spacer for preventing contact between the inner face of the first member and the outer face of the second member is provided on the inner face of the first member or on the outer face of the second member.
